# EUROPÄISCHE PATENTSCHRIFT

(11) **EP 2 946 129 B1**
(45) Veröffentlichungstag und Bekanntmachung des Hinweises auf die Patenterteilung: **12.09.2018**
(21) Anmeldenummer: 13807931.4
(22) Anmeldetag: 09.12.2013
(51) Int. Cl.: F16H 57/021, F16H 57/031

(54) **GETRIEBE MIT EINEM GEHÄUSE**
TRANSMISSION WITH A HOUSING
BOÎTE DE VITESSES DOTÉE D'UN CARTER

(30) Priorität: 15.01.2013 DE 102013000518
(43) Veröffentlichungstag der Anmeldung: 25.11.2015
(73) Patentinhaber: Sew-Eurodrive GmbH & Co. KG, 76646 Bruchsal (DE)
(72) Erfinder: WU, Zili, 300060 Tianjin (CN)
(86) Internationale Anmeldenummer: PCT/EP2013/003701
(87) Internationale Veröffentlichungsnummer: WO 2014/111106

(56) Entgegenhaltungen:
- WO-A1-2012/123046
- DE-A1-102005 053 772
- US-B1- 6 227 712

## Beschreibung

Die Erfindung betrifft ein Getriebe mit einem Gehäuse.

Es ist allgemein bekannt, dass Getriebe ein Gehäuse aufweisen.

**Beispielsweise ist aus der** gattungsgemässen US 6 227 712 B1 **als nächstliegender Stand der Technik ein Getriebe mit topfartigem Unterteil und darauf aufgesetzter Deckelplatte bekannt. Aus der** DE 10 2005 053 772 A1 **ist ein Getriebe mit einer Schmierölpumpe bekannt. Aus der** WO 2012 / 123046 A1 **ist eine Getriebevorrichtung mit Ölschmiersystem bekannt.**

Der Erfindung liegt daher die Aufgabe zugrunde, eine Getriebe mit einem Gehäuse weiterzubilden, wobei

Erfindungsgemäß wird die Aufgabe bei der nach den in Anspruch 1 angegebenen Merkmalen gelöst.

Von Vorteil ist dabei, dass eine einfache Montage ausführbar ist, eine hohe Dichtigkeit für das Schmieröl mittels der topfartigen Ausformung des Unterteils erreichbar ist, wobei eine hohe Strömungsgeschwindigkeit des Schmieröls durch eine Ölpumpe erreichbar ist und eine hohe Stabilität bei geringem Materialaufwand erreichbar ist.

Bei einer vorteilhaften Ausgestaltung sind die Lager in einer Linie fluchtend angeordnet und/oder die Lager sind im Hauptstamm des Lagerkreuzes angeordnet. Von Vorteil ist dabei, dass ein verdicktes Kreuz ausbildbar ist und somit mit wenig Materialaufwand eine hohe Steifigkeit erreichbar ist.

Bei einer vorteilhaften Ausgestaltung weist die Bodenplatte Rippen auf, die an ihrem ersten Ende mit einem Rahmen, insbesondere einen U-förmigen Rahmen, verbunden sind und mit ihrem anderen Ende mit dem Lagerkreuz der Bodenplatte verbunden sind,

insbesondere wobei die Rippen parallel zueinander ausgerichtet sind. Von Vorteil ist dabei, dass das Lagerkreuz in einem rechteckigen, insbesondere U-förmigen, Rahmen aufgenommen ist, wobei einerseits das Lagerkreuz direkt verbunden ist mit dem Rahmen und andererseits über die Rippen zusätzliche Verstrebungen zwischen Lagerkreuz und Rahmen vorgesehen sind, so dass die Steifigkeit und die Entwärmung verbessert sind.

Bei einer vorteilhaften Ausgestaltung sind am Rahmen der Bodenplatte Fußplatten verbunden, mit denen das Getriebe an eine Stellfläche aufstellbar ist. Von Vorteil ist dabei, dass der Boden nur an der Stellfläche bearbeitet und ausgerichtet werden muss. Die Fußplatten bilden also zum Boden hin gerichtete Erhebungen, die die Gewichtskraft des Getriebes und gegebenenfalls einer von der abtreibenden, in Gravitationsrichtung nach unten aus dem Getriebe herausragenden Welle angetriebenen Last in den Boden einleiten.

**Erfindungsgemäß** weist das Unterteil U-förmige Platten auf, welche die Bodenplatte mit einem am Unterteil vorgesehenen, an dem von der Bodenplatte abgewandten Endbereich des Unterteils angeordneten Flanschrahmen verbindet, auf welchem die Deckelplatte aufgesetzt und verbunden ist. Von Vorteil ist dabei, dass die Steifigkeit erhöht ist, insbesondere auch durch die Ausformung als U.

Vorzugsweise werden sechs voneinander in Umfangsrichtung beabstandete U-förmige Platten vorgesehen, welche den Flanschrahmen verbinden mit dem Rahmen. Der Flanschrahmen und der Rahmen sind rechteckförmig, so dass zusammen mit den Lagerkreuzen eine stabile Struktur erzeugbar ist.

Da an der vorderen und an der seitlichen Seitenwand jeweils eine U-förmige Platte angeordnet ist und somit die Schenkel der U zueinander transversal sind, ist eine wiederum erhöhte Stabilität erreichbar.

Bei einer vorteilhaften Ausgestaltung weist die Deckelplatte Wandabschnitte auf, die zwischen Lagerkreuz der Deckelplatte und dem Flanschrahmen der Deckelplatte angeordnet sind,

insbesondere wobei die Wandabschnitte dünner, also dünnwandiger, als das Lagerkreuz der Deckelplatte ausgeführt ist. Von Vorteil ist dabei, dass Dichtigkeit für das Schmieröl erreichbar ist.

**Erfindungsgemäß** weist das Unterteil Seitenwandabschnitte auf, welche einerseits mit dem Flanschrahmen des Unterteils und andererseits mit der Bodenplatte und/oder mit den U-förmigen Platten verbunden sind. Von Vorteil ist dabei, dass eine hohe Dichtigkeit für das Schmieröl erreichbar ist, wobei wenig Materialaufwand notwendig ist, da die Seitenwandabschnitte dünnwandiger als die U-förmigen Platten sind.

Bei einer vorteilhaften Ausgestaltung ist in einer Ausnehmung des Seitenwandabschnitts des Unterteils ein diese Ausnehmung abdeckendes Fenster vorgesehen. Von Vorteil ist dabei, dass eine Inspektion in einfacher Weise ermöglicht ist.

Allerdings ist das Fenster undurchsichtig, also intransparent, da es aus Stahl gefertigt ist.

Bei einer vorteilhaften Ausgestaltung ist ein eine oder die Ausnehmung des Seitenwandabschnitts des Unterteils begrenzender Fensterrahmen mit dem Seitenwandabschnitt schweißverbunden, wobei zwischen dem Seitenwandabschnitt und dem Fensterrahmen Klebstoff angeordnet ist,

insbesondere wobei ein Fenster auf den Fensterrahmen aufgeschraubt und/oder mit einer zwischengeordneten Dichtung dicht verbunden ist,

insbesondere wobei das Fenster aus Stahl und nicht transparent ist. Von Vorteil ist dabei, dass eine stabile und dichte Verbindung erreichbar ist.

Bei einer vorteilhaften Ausgestaltung ist ein Bolzen an einem Verbindungsabschnitt und/oder am Flanschrahmen angeordnet, wobei ein Sicherungsbügel für ein Tragseil am Bolzen angeordnet ist. Von Vorteil ist dabei, dass ein einfaches Transportieren mit einem Kran ausführbar ist.

Bei einer vorteilhaften Ausgestaltung ist die U-förmige Platte außerhalb des Seitenwandabschnitts angeordnet. Von Vorteil ist dabei, dass wenig Schmieröl notwendig ist und eine hohe Stabilität, insbesondere lange Hebelarmlängen, erreichbar sind.

Weitere Vorteile ergeben sich aus den Unteransprüchen. Die Erfindung ist nicht auf die Merkmalskombination der Ansprüche beschränkt. Für den Fachmann ergeben sich weitere sinnvolle Kombinationsmöglichkeiten von Ansprüchen und/oder einzelnen Anspruchsmerkmalen und/oder Merkmalen der Beschreibung und/oder der Figuren, insbesondere aus der Aufgabenstellung und/oder der sich durch Vergleich mit dem Stand der Technik stellenden Aufgabe.

Die Erfindung wird nun anhand von Abbildungen näher erläutert:

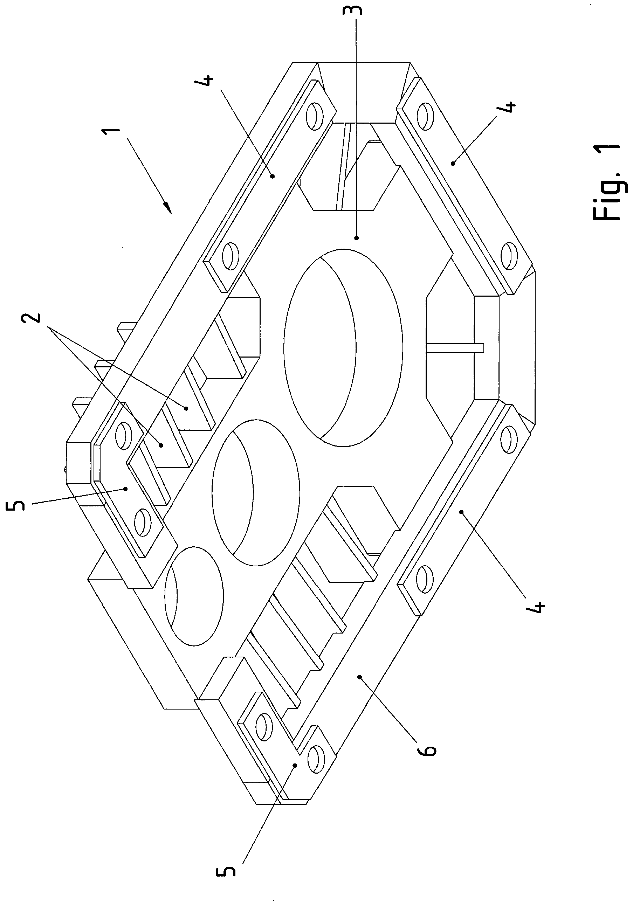

In der Figur 1 ist eine Schrägansicht auf eine Bodenplatte 1 eines erfindungsgemäßen Getriebes gezeigt.

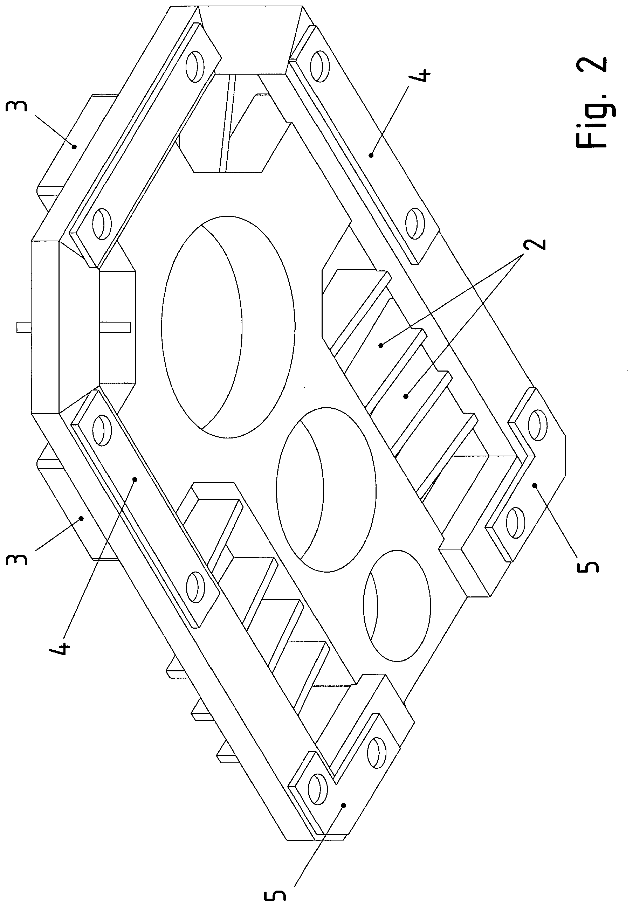

In der Figur 2 ist die Bodenplatte 1 aus einer anderen Blickrichtung gezeigt.

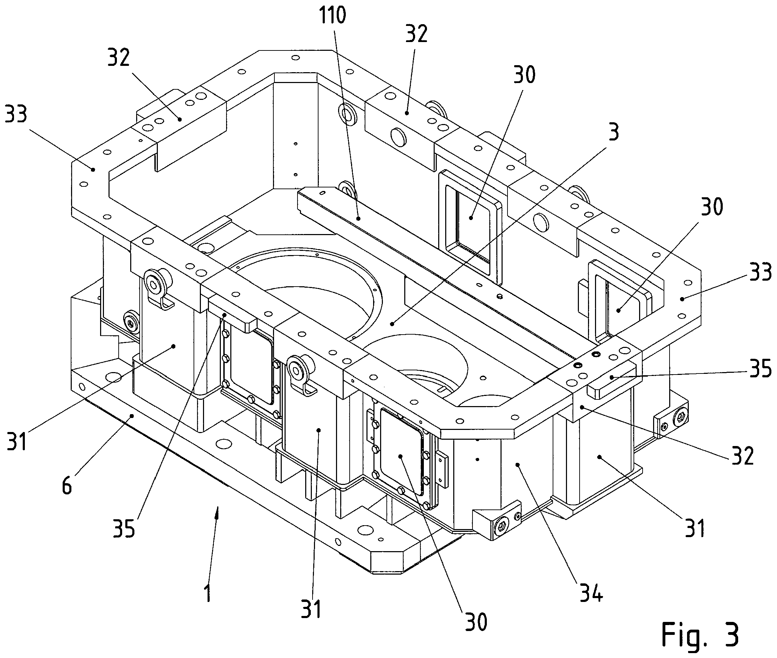

In der Figur 3 ist das auf die Bodenplatte 1 aufgesetzte Unterteil des Getriebes gezeigt.

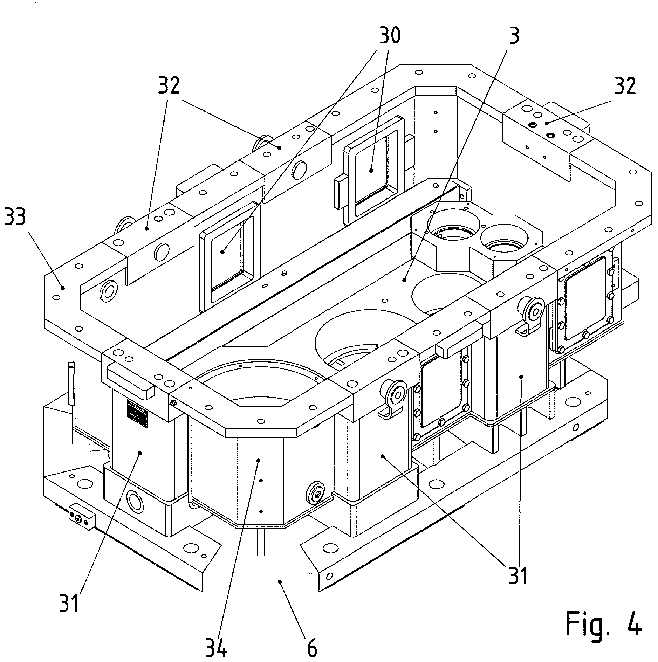

In der Figur 4 ist das auf die Bodenplatte 1 aufgesetzte Unterteil des Getriebes aus einer anderen Blickrichtung gezeigt.
In der Figur 5 ist das Getriebe mit auf das Unterteil aufgesetzter Deckelplatte gezeigt, wobei wiederum Lager, Wellen, Verzahnungsteile und Schmieröl nicht gezeigt sind.
In der Figur 6 ist eine U-förmige Platte zur Versteifung des Getriebegehäuses in Schrägansicht gezeigt, an welcher eine Aufnahme für ein Tragseil angeordnet ist.
In der Figur 7 ist ein zugehöriger Querschnitt gezeigt.
In der Figur 8 ist ein zugehöriger Längsschnitt gezeigt.

Wie in den Figuren gezeigt, werden Wellen des Getriebes in zumindest jeweils zwei Lagern gelagert, wobei das jeweilige erste Lager der Wellen in einem Lagerkreuz der Bodenplatte 1 aufgenommen ist. Dabei ist das Lagerkreuz 3 ein flaches kreuzartiges Teil, das mit einer hohen Wandstärke ausgeführt ist und somit eine hohe Steifigkeit aufweist. Die vier Enden des Kreuzes sind mit einem U-förmigen Rahmen 6 verbunden, der somit mit dem Kreuz eine ebene Anordnung bildet, insbesondere also das Kreuz umrahmt.

Die Aufnahmebohrungen für die Lager sind am Hauptstamm des Kreuzes angeordnet, insbesondere in einer linienhaften Anordnung.

Im Zwischenraumbereich zwischen dem Rahmen 6 und dem Hauptstamm des Kreuzes sind Rippen 2 angeordnet, welche an ihrem jeweils ersten Ende mit dem Hauptstamm und an ihrem anderen Ende mit dem Rahmen 6 verbunden sind.

Vorzugsweise sind die Rippen 2 zueinander parallel angeordnet. Auf diese Weise ist eine Entwärmung der Bodenplatte verbessert und zusätzlich der Rahmen 6 steif ans Lagerkreuz 3 verbunden, wobei nur wenig Material notwendig ist.

An der Unterseite des Rahmens 6 sind Fußplatten (4, 5) angeordnet, mit welchen die Bodenplatte auf bearbeiteten Bodenflächenabschnitten aufstellbar ist.

Das Unterteil des Getriebegehäuses ist mit der Bodenplatte zusammen topfartig ausgeführt. Hierzu weist das Unterteil Seitenwandabschnitte 34 auf, die in ihrem der Bodenplatte zugewandten Ende mit dieser verbunden sind und an ihrem anderen Ende, also an ihrem von der Bodenplatte abgewandten Ende mit einem Flanschrahmen 33, der vollständig umlaufend ausgebildet ist und der Gewindebohrungen aufweist, so dass die Deckelplatte auf den Flanschrahmen 33 aufsetzbar und schraubverbindbar ist.

Dabei weist der Flanschrahmen 33 jeweils verdickt ausgeführte Verbindungsabschnitte 32 auf, die jeweils eine Nase 35 aufweisen zur Ausrichtung und Zentrierung beim Verbinden der Deckelplatte auf dem Flanschrahmen 33.

Die Seitenwandabschnitte 34 sind dünnwandig ausgeführt. Die dicker ausgeführten Verbindungsabschnitte 32 sind mittels U-förmigen Platte 31 jeweils verbunden mit einem jeweiligen Endbereich des Lagerkreuzes 3 oder alternativ am U-förmigen Rahmen 6.

Die U-förmige Ausführung der Platten 31 erhöhen die Stabilität und/oder Steifigkeit des Getriebegehäuses. Dabei ist die Öffnung des U zum Getriebeinneren hin gerichtet, wobei die Schenkel des U an der Seitenwandabschnitt 34 enden und somit eine Steife Verbindung zwischen dem Flanschrahmen 33 und der Bodenplatte bilden.

An einigen der Seitenwandabschnitte 34 sind Fenster 30 angebracht. Hierzu weisen die Seitenwandabschnitte 34 jeweils eine Ausnehmung auf, deren Berandung Fensterrahmen bilden, welche auf der Außenseite des jeweiligen Seitenwandabschnitts 34 angeklebt und darüber hinaus angeschweißt sind. Somit liegt eine belastbare und dichte Verbindung der Fensterrahmen mit dem Seitenwandabschnitt 34 vor. Denn die Schweißverbindung bewirkt eine stabile Verbindung und der zwischen Fensterrahmen und Seitenwandabschnitt 34 angeordnete Klebstoff bewirkt die Dichtheit zusätzlich zum belastbaren und stabilen Verbinden.

Das Fenster 30 ist als Inspektionsfenster verwendbar und ist am Fensterrahmen angeschraubt, wobei eine zwischengeordnete Dichtung, insbesondere O-Ring-Dichtung, für Dichtheit sorgt.

Vorzugsweise ist das Fenster 30 aus Stahl. Bei geöffnetem Fenster 30 ist ein Blick auf das Lagerkreuz beziehungsweise die in ihm gelagerten Wellen ermöglicht.

Die topfförmige Ausführung des Unterteils ermöglicht, dass eine hohe Dichtheit für das Schmieröl in einfacher Weise erreichbar ist.

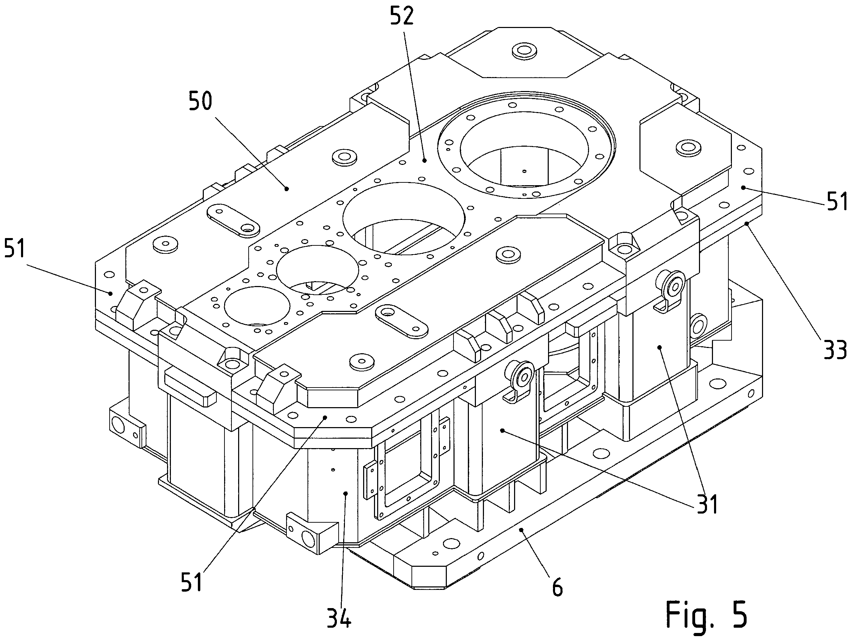

Wie in Figur 5 gezeigt, weist die Deckelplatte wiederum ein verdickt ausgeführtes Lagerkreuz 52 auf, so dass das andere Lager der Wellen in diesem Lagerkreuz 52 aufnehmbar ist.

Ein Flanschrahmen 51, welcher das Lagerkreuz 52 wiederum umgibt, ist ebenfalls in der Deckelplatte angeordnet und mittels Wandabschnitten 50 mit dem Lagerkreuz 52 verbunden, wobei die Wandabschnitte 50 dünner ausgeführt sind als das Lagerkreuz 52.

Im jeweiligen Verbindungsabschnitt 32 ist ein Bolzen 61 ausgeformt oder angeschweißt, der zum Anbringen eines Tragseils zum hängenden Transport des Getriebes geeignet ist. Da der Verbindungsabschnitt 32 verdickt ausgeführt ist, ist auch eine genügende Tragfähigkeit erreichbar.

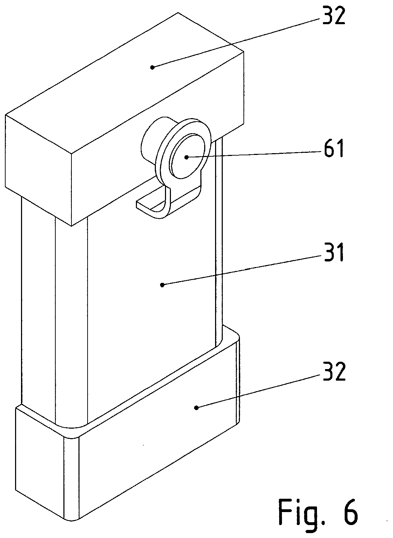

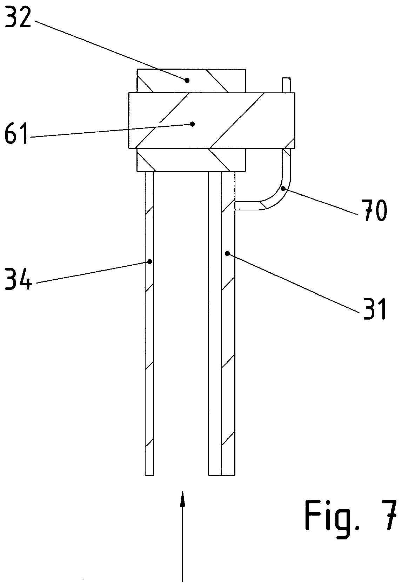

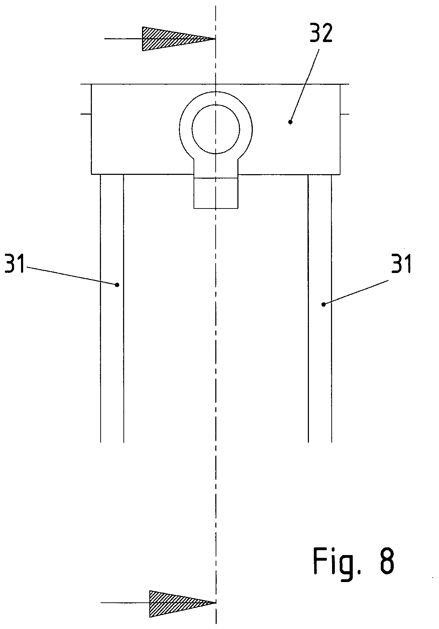

Wie in den Figuren 6 bis 8 gezeigt, ist zur Sicherung des Tragseils gegen Herunterrutschen ein Sicherungsbügel 70 zwischen der U-förmigen Platte 31 und dem Bolzen 61 bogenförmig verlaufend vorgesehen. Somit ist das Tragseil durch die vom Bolzen 61 und vom Sicherungsbügel 70 begrenzte Öffnung hindurchführbar.

Die beiden Lagerkreuze (3, 52) sind in Wellenachsrichtung voneinander beabstandet, aber durch Translation in Wellenachsrichtung theoretisch in Deckung bringbar.

Der am Flanschrahmen 33 einstückig ausgeformte Verbindungsabschnitt 32 mit Nase 35 ermöglicht ein besonders präzises horizontales Ausrichten der Deckelteils auf dem Unterteil. Die Nase ist hierzu an ihrer Oberseite bearbeitet und weist somit eine gut ausgerichtet Fläche auf.

Der Verbindungsabschnitt 32 weist Gewindebohrungen auf zur Schraubverbindung des Deckelteils und ist mit einer dickeren Wandstärke ausgeführt als der Flanschrahmen 33.

Vorzugsweise ist die Nase 35 aus einer an den Verbindungsabschnitt 32 oder Flanschrahmen 33 angeschweißten Stahlplatte gefertigt.

Im Getriebeinnenraum ist auch eine Ölsammelrinne 110 angeordnet, welche als StanzBiegeteil gefertigt ist und in welche das von einer Pumpe geförderte Öl fließen muss. Somit ist ein Ölförderkreislauf bei dem Getriebe ausgeführt und die Kühlung des Getriebes somit verbessert.

### Bezugszeichenliste

1 Bodenplatte
2 Kühlrippen
3 Lagerkreuz
4 Fußplatte
5 Fußplatte, winklig
6 Rahmen, insbesondere U-förmiger Rahmen
30 Fenster
31 U-förmige Platte
32 Verbindungsabschnitt
33 Flanschrahmen
34 Seitenwandabschnitt
35 Nase
50 Wandabschnitt
51 Flanschrahmen
52 Lagerkreuz
61 Bolzen
70 Sicherungsbügel zur Sicherung des Tragseils
110 Ölsammelrinne

## Patentansprüche

1. Getriebe mit einem Gehäuse, das ein topfartiges Unterteil und eine darauf aufgesetzte Deckelplatte aufweist,
wobei das Unterteil eine Bodenplatte (1) aufweist,
wobei die Bodenplatte (1) ein Lagerkreuz (3) aufweist, welches Lager der Wellen des Getriebes aufnimmt,
wobei die Deckelplatte ein weiteres Lagerkreuz (52) aufweist, welches Lager der Wellen des Getriebes aufnimmt,
**wobei das Unterteil U-förmige Platten aufweist, welche die Bodenplatte (1) mit einem von der Bodenplatte (1) abgewandten Flanschrahmen (33, 51) verbindet, auf welchem die Deckelplatte aufgesetzt und verbunden ist,**
**wobei das Unterteil Seitenwandabschnitte (34) aufweist, welche einerseits mit dem Flanschrahmen (33, 51) des Unterteils und andererseits mit der Bodenplatte (1) und/oder mit den U-förmigen Platten verbunden sind,**
**dadurch gekennzeichnet, dass**
**in einer Ausnehmung des Seitenwandabschnitts (34) des Unterteils ein diese Ausnehmung abdeckendes Fenster vorgesehen ist,**
**ein die Ausnehmung des Seitenwandabschnitts (34) des Unterteils begrenzender Fensterrahmen mit dem Seitenwandabschnitt (34) schweißverbunden ist, wobei zwischen dem Seitenwandabschnitt (34) und dem Fensterrahmen Klebstoff angeordnet ist.**

2. Getriebe nach Anspruch 1,
**dadurch gekennzeichnet, dass**
die Lager in einer Linie fluchtend angeordnet sind **oder** dass die Lager im Hauptstamm des Lagerkreuzes (52) angeordnet sind.

3. Getriebe nach mindestens einem der vorangegangenen Ansprüche,
**dadurch gekennzeichnet, dass**
die Bodenplatte (1) Rippen aufweist, die an ihrem ersten Ende mit einem Rahmen (6), verbunden sind und mit ihrem anderen Ende mit dem Lagerkreuz (3) der Bodenplatte (1) verbunden sind, wobei die Rippen parallel zueinander ausgerichtet sind..

4. Getriebe nach mindestens einem der vorangegangenen Ansprüche,
**dadurch gekennzeichnet, dass**
am Rahmen (6) der Bodenplatte (1) Fußplatten (4, 5) verbunden sind, mit denen das Getriebe an eine Stellfläche aufstellbar ist.

5. Getriebe nach mindestens einem der vorangegangenen Ansprüche,
**dadurch gekennzeichnet, dass**
die Deckelplatte Wandabschnitte (50) aufweist, die zwischen Lagerkreuz (52) der Deckelplatte und dem Flanschrahmen (33, 51) der Deckelplatte angeordnet sind,

6. Getriebe nach mindestens einem der vorangegangenen Ansprüche,
**dadurch gekennzeichnet, dass**
**ein Fenster auf den Fensterrahmen aufgeschraubt und mit einer zwischengeordneten Dichtung dicht verbunden ist.**

7. Getriebe nach mindestens einem der vorangegangenen Ansprüche,
**dadurch gekennzeichnet, dass**
**das Fenster aus Stahl und nicht transparent ist.**

8. Getriebe nach mindestens einem der vorangegangenen Ansprüche,
**dadurch gekennzeichnet, dass**
ein Bolzen (61) an einem Verbindungsabschnitt **oder** am Flanschrahmen (33, 51) angeordnet ist, wobei ein Sicherungsbügel (70) für ein Tragseil am Bolzen (61) angeordnet ist.

9. Getriebe nach mindestens einem der vorangegangenen Ansprüche,
**dadurch gekennzeichnet, dass**
die U-förmige Platte außerhalb des Seitenwandabschnitts (34) angeordnet ist.

10. Getriebe nach mindestens einem der vorangegangenen Ansprüche,
**dadurch gekennzeichnet, dass**
die Schenkel zweier U-förmigen Platten des Getriebes transversal **oder** senkrecht zueinander sind,

## Claims

1. A gear unit having a housing which has a pot-like lower part and a cover plate seated thereon,
wherein the lower part has a base plate (1),
wherein the base plate (1) has a bearing cross (3), which receives bearings of the shafts of the gear unit,
wherein the cover plate has a further bearing cross (52), which receives bearings of the shafts of the gear unit, wherein the lower part has U-shaped plates, which connect the base plate (1) to a flange frame (33, 51) which is remote from the base plate (1) and on which the cover plate is seated and connected,
wherein the lower part has side wall portions (34) which are connected to the flange frame (33, 51) of the lower part on the one hand and to the base plate (1) or to the U-shaped plates on the other,
**characterised in that**
a window covering a recess of the side wall portion (34) of the lower part is provided in this recess,
a window frame delimiting the recess of the side wall portion (34) of the lower part is connected to the side wall portion (34) by welding, wherein adhesive is arranged between the side wall portion (34) and the window frame.

2. The gear unit according to Claim 1,
**characterised in that**
the bearings are arranged flush in a line or **in that** the bearings are arranged in the main trunk of the bearing cross (52).

3. The gear unit according to at least one of the preceding claims,
**characterised in that**
the base plate (1) has ribs which are connected at their first end to a frame (6) and are connected by their other end to the bearing cross (3) of the base plate (1), wherein the ribs are aligned parallel to one another.

4. The gear unit according to at least one of the preceding claims,
**characterised in that**
bottom plates, with which the gear unit may be installed on an installation surface, are connected to the frame (6) of the base plate (1).

5. The gear unit according to at least one of the preceding claims,
**characterised in that**
the cover plate has wall portions (50) which are arranged between the bearing cross (52) of the cover plate and the flange frame (33, 51) of the cover plate.

6. The gear unit according to at least one of the preceding claims,
**characterised in that**
a window is screwed to the window frame and connected in a leak-tight manner with an interposed seal.

7. The gear unit according to at least one of the preceding claims,
**characterised in that**
the window is made from steel and is not transparent.

8. The gear unit according to at least one of the preceding claims,
**characterised in that**
a stud (61) is arranged on a connecting portion or on the flange frame (33, 51), wherein a securing clip (70) for a carrying cable is arranged on the stud (61).

9. The gear unit according to at least one of the preceding claims,
**characterised in that**
the U-shaped plate is arranged outside the side wall portion (34).

10. The gear unit according to at least one of the preceding claims,
**characterised in that**
the limbs of two U-shaped plates of the gear unit are transversal or perpendicular to one another.

## Revendications

1. Boîte de vitesses dotée d'un carter qui présente une partie inférieure en forme de pot et une plaque de recouvrement posée dessus,
la partie inférieure présentant une plaque de base (1),
la plaque de base (1) présentant une croix de support (3) qui reçoit des paliers des arbres de la boîte de vitesses,
la plaque de recouvrement présentant une autre croix de support (52) qui reçoit des paliers des arbres de la boîte de vitesses,
la partie inférieure présentant des plaques en forme de U qui relient la plaque de base (1) à un cadre de bridage (33, 51) éloigné de la plaque de base (1), sur lequel la plaque de recouvrement est posée et reliée,
la partie inférieure présentant des parties de paroi latérale (34) reliées d'une part au cadre de bridage (33, 51) de la partie inférieure et d'autre part à la plaque de base (1) ou aux plaques en forme de U,
**caractérisée en ce**
**qu'**une fenêtre recouvrant un évidement de la partie de paroi latérale (34) de la partie inférieure est prévue dans cet évidement,
**qu'**un cadre de fenêtre délimitant l'évidement de la partie de paroi latérale (34) de la partie inférieure est relié par soudage à la partie de paroi latérale (34), de l'adhésif étant disposé entre la partie de paroi latérale (34) et le cadre de fenêtre.

2. Boîte de vitesses selon la revendication 1,
**caractérisée en ce**
**que** les paliers sont alignés en affleurement ou que les paliers sont disposés dans la branche principale de la croix de support (52).

3. Boîte de vitesses selon au moins l'une des revendications précédentes,
**caractérisée en ce**
**que** la plaque de base (1) présente des nervures qui sont reliées par leur première extrémité à un cadre (6) et par leur autre extrémité à la croix de support (3) de la plaque de base (1),
les nervures étant orientées parallèlement entre elles.

4. Boîte de vitesses selon au moins l'une des revendications précédentes,
**caractérisée en ce**
**que** des plaques de pied (4, 5), avec lesquelles la boîte de vitesses peut être posée sur une surface de pose, sont reliés au cadre (6) de la plaque de base (1).

5. Boîte de vitesses selon au moins l'une des revendications précédentes,
**caractérisée en ce**
**que** la plaque de recouvrement présente des parties de paroi (50) qui sont disposées entre la croix de support (52) de la plaque de recouvrement et le cadre de bridage (33, 51) de la plaque de recouvrement.

6. Boîte de vitesses selon au moins l'une des revendications précédentes,
**caractérisée en ce**
**qu'**une fenêtre est vissée sur le cadre de la fenêtre et reliée à celui-ci de façon étanche par un joint intermédiaire.

7. Boîte de vitesses selon au moins l'une des revendications précédentes,
**caractérisée en ce**
**que** la fenêtre est en acier et n'est pas transparente.

8. Boîte de vitesses selon au moins l'une des revendications précédentes,
**caractérisée en ce**
**qu'**un boulon (61) est disposé sur une partie de liaison ou sur le cadre de bridage (33, 51), un arceau de fixation (70) pour un câble porteur étant disposé sur le boulon (61).

9. Boîte de vitesses selon au moins l'une des revendications précédentes,
**caractérisée en ce**
**que** la plaque en forme de U est disposée à l'extérieur de la partie de paroi latérale (34).

10. Boîte de vitesses selon au moins l'une des revendications précédentes,
**caractérisée en ce que**
les branches de deux plaques en forme de U de la boîte de vitesses sont transversales ou perpendiculaires l'une à l'autre.
